# EUROPEAN PATENT SPECIFICATION

(11) **EP 3 187 698 B1**
(45) Date of publication and mention of the grant of the patent: **13.03.2019**
(21) Application number: 16203751.9
(22) Date of filing: 13.12.2016
(51) Int. Cl.: F01D 25/12, F01D 17/08

(54) **PASSIVE FLOW MODULATION OF COOLING FLOW WITH TELEMETRY**
PASSIVE STRÖMUNGSMODULATION ZUR KÜHLUNG EINER STRÖMUNG MIT TELEMETRIE
MODULATION D'ÉCOULEMENT PASSIF DE FLUX DE REFROIDISSEMENT AVEC TÉLÉMÉTRIE

(30) Priority: 30.12.2015 US 201514983774
(43) Date of publication of application: 05.07.2017
(73) Proprietor: General Electric Company, Schenectady, NY 12345 (US)
(72) Inventor: TRALSHAWALA, Nilesh, Schenectady, NY New York 12345 (US); MIRANDA, Carlos Miguel, Schenectady, NY New York 12345 (US)
(74) Representative: Lee, Brenda

(56) References cited:
- US-A1- 2013 330 168
- US-A1- 2014 255 145
- US-B1- 7 445 424

## Description

### BACKGROUND OF THE INVENTION

The disclosure relates generally to turbomachines, and more particularly, to passive flow modulation of cooling flow with telemetry.

Turbines are widely used in a variety of aviation, industrial, and power generation applications to perform work. Such turbines generally include alternating stages of peripherally mounted stator vanes and rotating blades. The stator vanes may be attached to a stationary component such as a casing that surrounds the turbine, and the rotating blades may be attached to a rotor located along an axial centerline of the turbine. A compressed working fluid, such as steam, combustion gases, or air, flows along a gas path through the turbine to produce work. The stator vanes accelerate and direct the compressed working fluid onto a subsequent stage of rotating blades to impart motion to the rotating blades, thus turning the rotor and performing work.

Various components (e.g., blades, nozzles, shrouds, etc.) and areas (e.g., wheelspace between stator and rotor) of a turbine are typically cooled in some fashion to remove heat transferred by the hot gas path. A gas such as compressed air from an upstream compressor may be supplied through at least one cooling circuit including one or more cooling passages to cool the turbine. Further, various components and areas of a turbine may experience damaging conditions during operation of the turbine. Accurate measurements of these operating conditions, including temperature, may be required to take appropriate steps to correct or prevent any damage that may occur in the turbine and/or to optimize the operation of the turbine. One approach to obtaining temperature data in a turbine uses wired sensors, which often requires wiring between a rotating component and a stationary part of the turbine. However, a wired approach may be complex, expensive, and unreliable, due in part to the high temperatures in the turbine, as the electronic characteristics of the wiring may limit the range of temperatures over which a wired sensor may operate accurately.

Due to the limitations of wired sensors, wired measurements may only be taken during testing of the turbine; during operation in the field, wired sensors may be impractical.

However, monitoring these conditions over the entire lifespan of the turbine is desirable to ensure reliable operation of the turbine. Temperature measurements taken in the field may be correlated with control parameters to optimize field operation of the turbine. Change observed in these measurements over time may be also used to assess the health of the blades and other components of the turbine, allowing for appropriate maintenance scheduling.

System and methods of controlling cooling airflow in gas turbine systems are described in US 2014/0255145 and US 2013/0330168.

### BRIEF DESCRIPTION OF THE INVENTION

A first aspect of the disclosure provides a system adapted for use with a turbine, comprising: a passive flow modulation device positioned within the turbine for modulating a flow of cooling air, the passive flow modulation device including a housing containing a temperature sensitive element adapted to actuate the passive flow modulation device; the system further comprising: a temperature sensor attached to the housing containing the temperature sensitive element, the temperature sensor providing temperature-related data; and an analyzing system for determining a flow rate of the cooling air based on the temperature-related data.

A second aspect of the disclosure provides a turbomachine, including: a gas turbine system including a compressor component, a combustor component, a turbine component and a system as described above.

A third aspect of the disclosure provides cooling system, including: a passive flow modulation device positioned within a turbine for modulating a flow of cooling air through an orifice into a wheelspace cavity, the passive flow modulation device including a housing containing a temperature sensitive element; a temperature sensor attached to the housing containing the temperature sensitive element, the temperature sensor providing temperature-related data; an interrogating system, located external to the turbine, for interrogating the temperature sensor and for receiving the temperature-related data from the temperature sensor; an analyzing system for determining a flow rate of the cooling air based on the temperature-related data; and a control system for adjusting at least one operational characteristics of the turbine based on the temperature-related data.

### BRIEF DESCRIPTION OF THE DRAWINGS

These and other features of this disclosure will be more readily understood from the following detailed description of the various aspects of the disclosure taken in conjunction with the accompanying drawing that depicts various embodiments of the disclosure.
FIG. 1 is a schematic diagram of a gas turbine system according to embodiments.
FIG. 2 is a cross-sectional view of a rotor, stator, and a plurality of passive flow modulation (PFM) devices according to embodiments.
FIG. 3 depicts a PFM device in a closed position according to embodiments.
FIG. 4 depicts the PFM device of FIG. 3 in an open position according to embodiments.
FIG. 5 depicts a graph of the flow modulation provided by the PFM device of FIGS. 3 and 4 according to embodiments.
FIG. 6 depicts a PFM device in a reduced flow position according to embodiments.
FIG. 7 depicts the PFM device of FIG. 6 in a full flow position according to embodiments.
FIG. 8 depicts a graph of the flow modulation provided by the PFM device of FIGS. 6 and 7 according to embodiments.
FIG. 9 depicts a telemetry system and turbine according to embodiments.

It is noted that the drawing of the disclosure is not to scale. The drawing is intended to depict only typical aspects of the disclosure, and therefore should not be considered as limiting the scope of the disclosure. In the drawing, like numbering represents like elements between the drawings.

### DETAILED DESCRIPTION OF THE INVENTION

The disclosure relates generally to turbomachines, and more particularly, to passive flow modulation of cooling flow with telemetry.

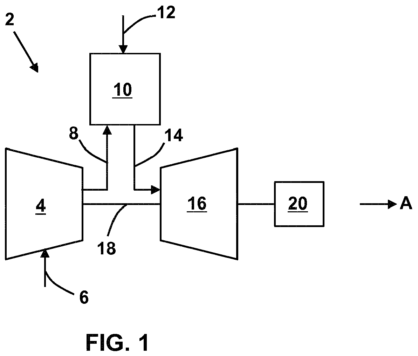

In the Figures, for example in FIG. 1, the "A" axis represents an
axial orientation. As used herein, the terms "axial" and/or "axially" refer to the relative position/direction of objects along axis A, which is substantially parallel with the axis of rotation of the turbomachine (in particular, the rotor section). As further used herein, the terms "radial" and/or "radially" refer to the relative position/direction of objects along an axis (r), which is substantially perpendicular with axis A and intersects axis A at only one location. Additionally, the terms "circumferential" and/or "circumferentially" refer to the relative position/direction of objects along a circumference (c) which surrounds axis A but does not intersect the axis A at any location.

Referring now to the drawings, in which like numerals refer to like elements throughout the several views, FIG. 1 shows a schematic view of a gas turbine system 2 as may be used herein. The gas turbine system 2 may include a compressor 4. The compressor 4 compresses an incoming flow of air 6.

The compressor 4 delivers a flow of compressed air 8 to a combustor 10. The combustor 10 mixes the flow of compressed air 8 with a pressurized flow of fuel 12 and ignites the mixture to create a flow of combustion gases 14. Although only a single combustor 10 is shown, the gas turbine system 2 may include any number of combustors 10. The flow of combustion gases 14 is in turn delivered to a turbine 16. The flow of combustion gases 14 drives the turbine 16 to produce mechanical work. The mechanical work produced in the turbine 16 drives the compressor 4 via a shaft 18, and may be used to drive an external load 20, such as an electrical generator and/or the like.

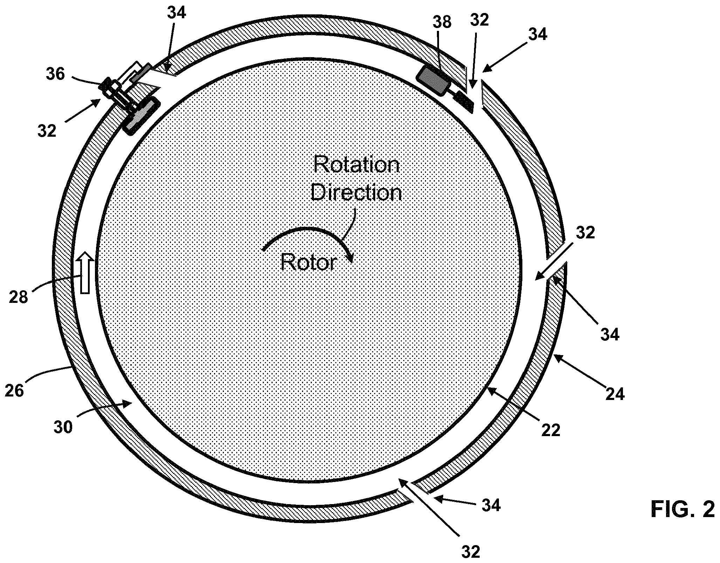

A cross-sectional view of a turbine rotor 22 rotating within a stator 24 (e.g., along axis A) during operation of a gas turbine system 2 (FIG. 1) is depicted in FIG. 2. A rotating flow of air 28 is produced in a wheelspace cavity 30 within the stator 24 during rotation of the rotor 22. A plurality of orifices 34 are circumferentially positioned about the stator 24. Cooling air 32 is tangentially injected via the plurality of orifices 34 into the wheelspace cavity 30 in a direction of rotation of the rotor 22. The cooling air 32 may be generated for example by a compressor 4 of a gas turbine system 2 (FIG. 1). The orifices 34 may be used, for example, as pre-swirl orifices and/or flow inducers in manner known in the art. According to embodiments, at least one of the plurality of orifices 34 is provided with a passive flow modulation (PFM) device 36 or 38 for selectively controlling the amount of cooling air 32 that is allowed to pass through the orifice 34 into the wheelspace cavity 30.

According to embodiments, a PFM device 36, 38 may be used in series with an orifice 34 to variably control the flow of cooling air 32 passing through the orifice 34 into the wheelspace 30. For example, the PFM device 36, 38 may initiate the flow of cooling air through the orifice 34, and then increase and accelerate the flow of cooling air 32 exiting the orifice 34 into the wheelspace cavity 30 to or close to the speed of rotation of the rotor 22. Each orifice 34 includes a defined effective throat area and exit angle α to provide a flow path such that the exit velocity and orientation of the air flow provides optimal heat transfer efficiency in the wheelspace cavity 30. The PFM device 36, 38 provides cooling flow savings across the operating range of the turbine 16 and improves the output and efficiency of the turbine 16. Although described herein for use in cooling air 32 passing into the wheelspace 30, various embodiments of the present disclosure may be used, in general, in an turbine environment where there is a colder cavity at higher pressure and a hotter cavity at lower pressure requiring a modulated amount of cooling flow during specified turbine operating modes.

One or more of the orifices 34 may provide a continuous flow of cooling air 32 into the wheelspace cavity 30. Such an orifice 34 is depicted in the lower section of FIG. 2.

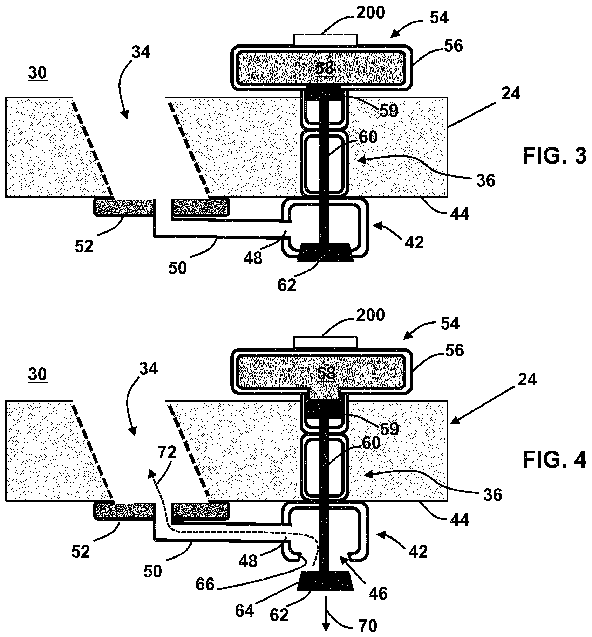

The PFM device 36 according to embodiments is depicted in FIGS. 3 and 4. The PFM device 36 is in a closed position in FIG. 3 and in an open position in FIG. 4. In embodiments, some of the components of the PFM device 36 are located outside the stator 24, while other components are disposed within the wheelspace cavity 30.

The PFM device 36 includes a valve system 42 positioned on or near an exterior surface 44 of the stator 24. The valve system 42 includes at least one gas inlet port 46 (FIG. 4) and a gas outlet port 48. A conduit 50 fluidly couples the gas outlet port 48 of the valve system 42 to the orifice 34. A seal 52 prevents cooling air from passing directly from an exterior of the stator 24 into the orifice 34 and wheelspace cavity 30.

A temperature sensitive element 54 disposed within the wheelspace cavity 30 may be used for actuating the PFM device 36. In embodiments, the temperature sensitive element 54 may include a housing 56 containing a thermally expandable material 58. The thermally expandable material 58 may include, for example, a silicon heat transfer fluid or any other suitable thermally expandable material that is stable at the operating temperatures of the turbine 16 (e.g., up to 1300 °F). In other embodiments, the temperature sensitive element 54 may include, for example, a bimetallic element or other type of arrangement that changes size and/or shape in response to a change in temperature.

The thermally expandable material 58 within the housing 56 engages a head 59 of a piston 60, which extends through the stator 24. In embodiments, the valve system 42 includes a valve disc 62 that is attached to a distal end of the piston 60. Opposing outer side surfaces 64 (FIG. 4) of the valve disc 62 are configured to mate with corresponding surfaces of a valve seat 66 of the valve system 42. In further embodiments, other valve mechanisms such as, for example, a spring-loaded pintle, a ball and stopper, a butterfly plate valve, and/or the like may be used.

The PFM device 36 is shown in a closed configuration in FIG. 3. That is, in the closed configuration, at least a portion of the outer side surfaces 64 of the valve disc 62 engage the valve seat 66 of the valve system 42. In the closed configuration, cooling air 32 is prevented from flowing from a colder area, outside of the stator 24, through the conduit 50 and the orifice 34 into the hotter wheelspace cavity 30.

Referring now to FIG. 4, an increase in temperature in the wheelspace cavity 30 causes an enlargement of the thermally expandable material 58 within the housing 56. As a result, the thermally expandable material 58 expands and forces the head 59 of the piston 60 downward. The displacement of the piston 60 forces the valve disc 62 attached to the end of the piston 60 away from the valve seat 66 as indicated by arrow 70. When the outer side surfaces 64 of the valve disc 62 no longer contact the valve seat 66, a flow of cooling air 32 begins to flow from the gas inlet port 46 through the gas outlet port 48, conduit 50, and orifice 34, into the wheelspace cavity 30 as indicated by arrow 72. The flow of cooling air 32 increases as the valve disc 62 moves farther away from the valve seat 66 (as the temperature increases further) as more flow area is provided between the outer side surfaces 64 of the valve disc 62 and the valve seat 66.

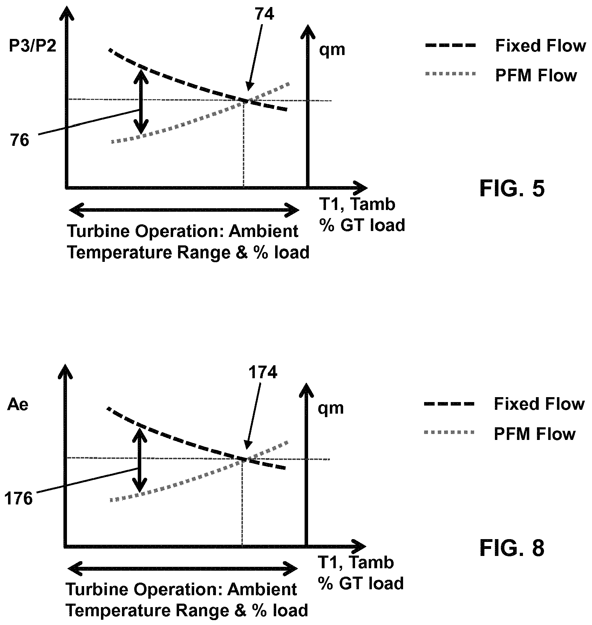

A graph of the flow modulation provided by the PFM device 36 is illustrated in FIG. 5. As shown, the ratio of the pressure (P3) in the orifice 34 and the pressure (P2) in the wheelspace cavity 30, as well as the air mass flow (qm) through the orifice 34, increases as the temperature (T1) and turbine load (GT load) increase. Arrow 74 indicates a target pressure ratio (P3/P2) and air mass flow (qm) for optimized cooling efficiency for an illustrative turbine (e.g., turbine 16). As indicated by arrow 76, the PFM device 36 provides a substantial cooling flow savings across much of the operating range of the turbine as compared to a fixed flow, which improves the output and efficiency of the turbine.

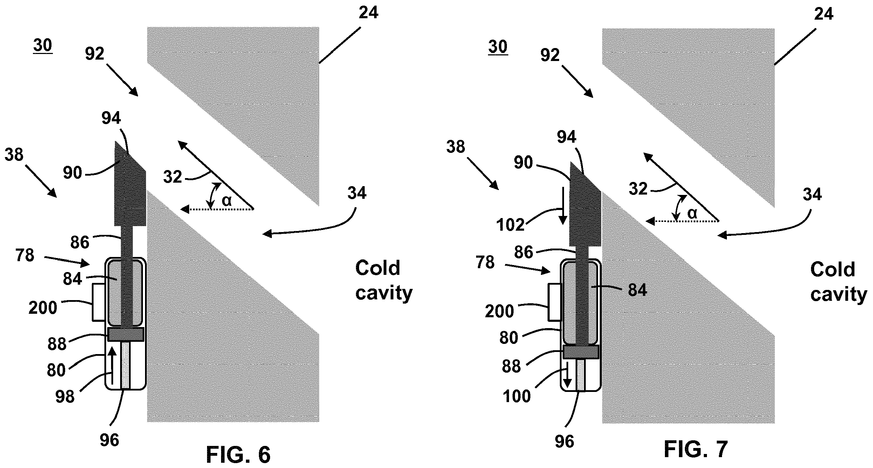

The PFM device 38 according to embodiments is depicted in FIGS. 6 and 7. The PFM device 38 is in a reduced flow position in FIG. 6 and in a full flow position in FIG. 6. In embodiments, the PFM device 38 is disposed within the wheelspace cavity 30.

The PFM device 38 includes a temperature sensitive element 78 disposed within the wheelspace cavity 30. In embodiments, the temperature sensitive element 78 includes a housing 80 partially filled with a thermally expandable material 84. The thermally expandable material 84 may include, for example, a silicon heat transfer fluid or any other suitable thermally expandable material that is stable at the operating temperatures of the turbine 16. In other embodiments, the temperature sensitive element 78 may include, for example, a bimetallic element or other type of arrangement that changes size and/or shape in response to a change in temperature.

A piston 86 is coupled to a movable shelf 88. A head 90 of the piston 86 extends at least partially over an exit 92 of an orifice 34. The distal end surface 94 of the head 90 of the piston 86 may have an angled configuration corresponding to the flow angle α of cooling air 32 through the orifice 34 into the wheelspace cavity 30. The angled configuration of the distal end surface 94 of the head 90 of the piston 86 helps to direct the flow of, and maintain the exit angle of, cooling air 32 into the wheelspace cavity 30. Other configurations of the end surface 94 of the head 90 of the piston 86 (e.g., perpendicular to the displacement direction of the piston 86) may also be used.

A biasing member 96 (e.g., a spring) biases the movable shelf 88 and piston 86 towards the exit 92 of the orifice 34 as indicated by arrow 98. In the configuration depicted in FIG. 6, the head 90 of the piston 86 extends at least partially over the exit 92 of the orifice 34. This reduces the flow of cooling air 32 that can pass through the orifice 34 into the wheelspace cavity 30.

Referring now to FIG. 7, an increase in temperature in the wheelspace cavity 30 causes an expansion of the thermally expandable material 84 within the housing 80 and a corresponding displacement of the piston 86 in direction 100. The force applied by the piston 86 counteracts the biasing force applied by the biasing member 96 and forces the movable shelf 88 and piston 86 in direction 100. As indicated by arrow 102, the expansion of the thermally expandable material 84 displaces the head 90 of the piston 86 away from the exit 92 of the orifice 34. Since the head 90 of the piston 86 is now blocking less of the exit 92 of the orifice 34, a larger flow of cooling air 32 can pass through the orifice 34 into the wheelspace cavity 30. The flow of cooling air 32 continues to increase as the temperature within the wheelspace cavity 30 increases, which causes additional displacement of the head 90 of the piston 86 away from the exit 92 of the orifice 34. In FIG. 7, the exit 92 of the orifice 34 is fully open.

A graph of the flow modulation provided by a PFM device 38 is illustrated in FIG. 8.

As shown, the effective flow area (Ae) and the air mass flow (qm) of the cooling air 32 through the orifice 34 increase as the temperature (T1) and turbine load (GT load) increase. Arrow 174 indicates a target effective flow area (Ae) and air mass flow (qm) for optimized cooling efficiency for an illustrative turbine (e.g., turbine 16). As indicated by arrow 176, the PFM device 38 provides a substantial cooling flow savings across much of the operating range of the turbine as compared to a fixed flow, which improves the output and efficiency of the turbine.

A PFM device is often used in a high temperature (e.g., in a range of about 500°C to about 600°C, or more generally, at a temperature greater than about 500°C) operating environment of a turbine, such as in a wheelspace cavity, making it difficult to determine real time operating conditions (e.g., temperature, cooling flow consumption, etc.) of the PFM device. According to embodiments, a temperature sensor 200 (FIGS. 3, 4, 6, 7, 9) may be attached to an outer surface of the housing in the PFM device containing the supply of thermally expandable material. The temperature sensor 200 may directly measure in real time the temperature at the outer surface of the housing or may output a signal that can be used in the calculation of the temperature at the outer surface of the housing. Regardless, once the temperature is known, a flow rate of the cooling air through the PFM device can be determined, for example, using an empirical relationship between the surface temperature of the housing containing the temperature sensitive element and the cooling flow thru the PFM device. Such a relationship is presented, for example, in the graphs depicted in FIGS. 5 and 8. Further, the temperature measurements obtained during operation of the turbine (e.g., in the field) may be correlated with control parameters and other turbine data to optimize operation of the turbine.

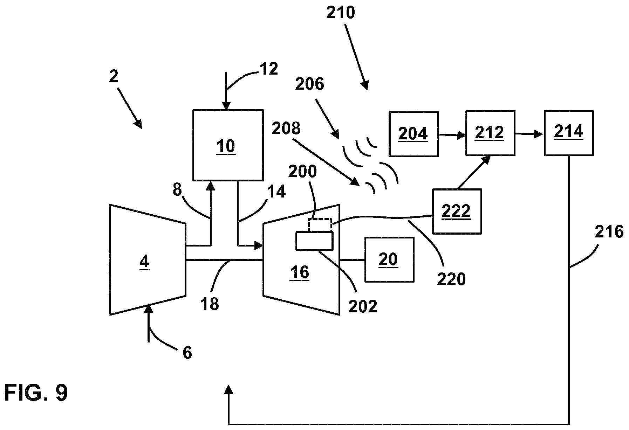

A telemetry system 210 according to embodiments is depicted in FIG. 9. The telemetry system 210 includes a temperature sensor 200 attached to a PFM device 202 located within the turbine 16. In embodiments, the temperature sensor 200 may comprises a wireless temperature sensor. In other embodiments, the temperature sensor 200 may comprise a wired temperature sensor. As disclosed above, the temperature sensor 200 may be attached to an outer surface of a housing of the PFM device 202 containing a supply of thermally expandable material. In general, the PFM device 202 is not physically accessible during operation of the turbine 16. In FIGS. 3 and 4, for example, the temperature sensor 200 is attached to an outer surface of the housing 56 containing a supply of thermally expandable material 58. In FIGS. 6 and 7, the temperature sensor 200 is attached to an outer surface of the housing 80 containing a supply of thermally expandable material 84.

A wireless temperature sensor 200 may comprise, for example, a surface acoustic wave (SAW) sensor, a printed direct write conformal sensor, or other suitable sensor that can withstand the high temperature environment within an operating turbine 16 and that can be wirelessly interrogated (e.g., via an RF interrogating system). FIG. 9, for example, depicts an RF interrogating system 204 interrogating 206 and receiving 208 data from a wireless temperature sensor 200.

The data received by interrogating system 204 is provided to an analyzing system 212. As described above, the data may include, for example, temperature data measured by the temperature sensor 200 itself, or a signal that can be used to in the calculation of the temperature data. In the latter case, the analyzing system 212 may be configured to perform the temperature calculation. In addition, the analyzing system 212 may be configured to determine, based on the temperature data, a flow rate of the cooling air through the PFM device 202 (e.g., based on the associated flow versus temperature graphs depicted in FIGS. 5 and 8). A turbine control system 214 receives the output of the analyzing system 212 and, based on the received data, sends control signals 216 to one or more components of the gas turbine system 2 to adjust one or more operational characteristics (e.g., cooling gas flow) of the gas turbine system 2 (e.g., for firing curve correction).

A wired temperature sensor 200 may comprise, for example, a thermocouple, a resistive temperature detector, or other suitable wired temperature sensor that can withstand the high temperature environment within an operating turbine 16. In this case, as shown in FIG. 9, wiring 220 is provided for coupling the wired temperature sensor 200 to an interrogating system 222, which is coupled to the analyzing system 212. The analyzing system 212 operates as detailed above.

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., fastening, ultrasonic welding, bonding).

When an element or layer is referred to as being "on", "engaged to", "connected to" or "coupled to" another element, it may be directly on, engaged, connected or coupled to the other element, or intervening elements may be present. In contrast, when an element is referred to as being "directly on," "directly engaged to", "directly connected to" or "directly coupled to" another element, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A system adapted for use with a turbine, comprising:
a passive flow modulation device (36, 38) adapted to be positioned within the turbine (16) for modulating a flow of cooling air (32), the passive flow modulation device (36, 38) including a housing (56, 80) containing a temperature sensitive element (54, 78) adapted to actuate the passive flow modulation device; **characterized in that** the system further comprises:
a temperature sensor (200) attached to the housing (56, 80) containing the temperature sensitive element (54, 78), the temperature sensor (200) providing temperature-related data; and an analyzing system (212) for determining a flow rate of the cooling air (32) based on the temperature-related data.

2. The system according to claim 1, wherein the temperature-related data includes a temperature measurement at the housing (56, 80) containing the temperature sensitive element (54, 78) or data for use in a calculation of a temperature at the housing (56, 80) containing the temperature sensitive element (54, 78).

3. The system according to claim 1 or 2, wherein the temperature sensor (200) comprises a wireless temperature sensor (200) or a wired temperature sensor (200).

4. The system according to claim 3, wherein the wireless temperature sensor (200) includes a surface acoustic wave (SAW) sensor or a direct write sensor.

5. The system (212) according to claim 3, wherein the wired temperature sensor (200) includes a thermocouple or a resistive temperature detector.

6. The system (212) according to any of claims 1 to 5, further comprising an interrogating system (204) for interrogating (206) the temperature sensor (200) and for receiving (208) the temperature-related data from the temperature sensor (200).

7. The system according to claim 6, wherein the interrogating system (204) is adapted to be located external to the turbine (16).

8. The system according to any preceding claim, further comprising a turbine control system (214) for adjusting at least one operational characteristics of the turbine (16) based on the temperature-related data.

9. The system according to any preceding claim, wherein the temperature sensitive element (54, 78) includes a thermally expandable material (58, 84).

10. The system according to any preceding claim, wherein the passive flow modulation device is adapted to modulate a flow of cooling air (32) through an opening into a wheelspace cavity (30) of the turbine (16).

11. The system according to any preceding claim, wherein the housing (56, 80) containing the temperature sensitive element (54, 78) is adapted to be positioned between a stator (24) and rotor (22) of the turbine (16), or wherein the housing (56, 80) containing the temperature sensitive element (54, 78) is adapted to be positioned external to a stator (24) of the turbine (16).

12. A turbomachine, comprising:
a gas turbine system (2) including a compressor component (4), a combustor component (10), and a turbine component (16); and
the system of any preceding claim.

13. A cooling system, comprising the system of any of claims 1 to 11 wherein:
the passive flow modulation device (36, 38) is adapted to be positioned within the turbine (16) for modulating a flow of cooling air (32) through an orifice (34) into a wheelspace cavity (30).

## Patentansprüche

1. System, das zur Verwendung mit einer Turbine angepasst ist, umfassend:
eine passive Strömungsmodulationsvorrichtung (36, 38), die angepasst ist, um innerhalb der Turbine (16) zur Modulation einer Strömung von Kühlluft (32) positioniert ist, wobei die passive Strömungsmodulationsvorrichtung (36, 38) ein Gehäuse (56, 80) aufweist, das ein temperaturempfindliches Element (54, 78) enthält, das angepasst ist, um die passive Strömungsmodulationsvorrichtung zu betätigen; **dadurch gekennzeichnet, dass** das System weiter umfasst:
einen Temperatursensor (200), der an dem Gehäuse (56, 80), das das temperaturempfindliches Element (54, 78) enthält, befestigt ist, wobei der Temperatursensor (200) temperaturbezogene Daten bereitstellt; und
ein Analysesystem (212) zum Bestimmen einer Strömungsrate der Kühlluft (32) basierend auf den temperaturbezogene Daten.

2. System nach Anspruch 1, wobei die temperaturbezogenen Daten eine Temperaturmessung an dem Gehäuse (56, 80), das das temperaturempfindliche Element (54, 78) enthält, oder Daten zur Verwendung in einer Berechnung einer Temperatur an dem Gehäuse (56, 80), das das temperaturempfindliche Element (54, 78) enthält, aufweisen.

3. System nach Anspruch 1 oder 2, wobei der Temperatursensor (200) einen drahtlosen Temperatursensor (200) oder einen drahtgebundenen Temperatursensor (200) umfasst.

4. System nach Anspruch 3, wobei der Temperatursensor (200) einen akustischen Oberflächenwellen (SAW) -Sensor oder einen direkt beschreibbaren Sensor aufweist.

5. System (212) nach Anspruch 3, wobei der drahtgebundene Temperatursensor (200) ein Thermoelement oder einen Widerstandstemperaturdetektor aufweist.

6. System (212) nach einem der Ansprüche 1 bis 5, weiter umfassend ein Abfragesystem (204) zum Abfragen (206) des Temperatursensors (200) und zum Empfangen (208) der temperaturbezogenen Daten von dem Temperatursensor (200).

7. System nach Anspruch 6, wobei das Abfragesystem (204) angepasst ist, um außerhalb der Turbine (16) angeordnet zu sein.

8. System nach einem vorstehenden Anspruch, weiter umfassend ein Turbinensteuersystem (214) zum Einstellen von zumindest einer Betriebseigenschaft der Turbine (16) basierend auf den temperaturbezogenen Daten.

9. System nach einem vorstehenden Anspruch, wobei das temperaturempfindliche Element (54, 78) ein thermisch ausdehnbares Material (58, 84) aufweist.

10. System nach einem vorstehenden Anspruch, wobei die passive Strömungsmodulationsvorrichtung angepasst ist, um eine Strömung von Kühlluft (32) durch eine Öffnung in einen Radbereichshohlraum (30) innerhalb der Turbine (16) zu modulieren.

11. System nach einem vorstehenden Anspruch, wobei das Gehäuse (56, 80), das das temperaturempfindliche Element (54, 78) enthält, angepasst ist, um zwischen einem Stator (24) und einem Rotor (22) der Turbine (16) positioniert zu sein, oder wobei das Gehäuse (56, 80), das das temperaturempfindliche Element (54, 78) enthält, angepasst ist, um außerhalb eines Stators (24) der Turbine (16) positioniert zu sein.

12. Turbomaschine, umfassend:
ein Gasturbinensystem (2), das eine Verdichterkomponente (4), eine Brennkammerkomponente (10) und eine Turbinenkomponente (16) aufweist; und
das System nach einem vorstehenden Anspruch.

13. Kühlsystem, umfassend das System nach einem der Ansprüche 1 bis 11, wobei:
die passive Strömungsmodulationsvorrichtung (36, 38) angepasst ist, um zur Modulation einer Strömung von Kühlluft (32) durch ein Bohrloch (34) in einen Radbereichshohlraum (30) innerhalb der Turbine (16) positioniert zu sein.

## Revendications

1. Système adapté pour être utilisé avec une turbine, comprenant :
un dispositif de modulation d'écoulement passif (36, 38) adapté pour être positionné à l'intérieur de la turbine (16) pour la modulation d'un flux d'air de refroidissement (32), le dispositif de modulation d'écoulement passif (36, 38) incluant un logement (56, 80) contenant un élément sensible à la température (54, 78) adapté pour actionner le dispositif de modulation d'écoulement passif; **caractérisé en ce que** le système comprend en outre :
un capteur de température (200) fixé au logement (56, 80) contenant l'élément sensible à la température (54, 78), le capteur de température (200) fournissant des données liées à la température ; et un système d'analyse (212) pour déterminer un débit de l'air de refroidissement (32) sur la base des données liées à la température.

2. Système selon la revendication 1, dans lequel les données liées à la température incluent une mesure de température au niveau du logement (56, 80) contenant l'élément sensible à la température (54, 78) ou des données à utiliser dans un calcul d'une température au niveau du logement (56, 80) contenant l'élément sensible à la température (54, 78).

3. Système selon la revendication 1 ou 2, dans lequel le capteur de température (200) comprend un capteur de température (200) sans fil ou un capteur de température (200) filaire.

4. Système selon la revendication 3, dans lequel le capteur de température (200) sans fil inclut un capteur d'ondes acoustiques de surface (SAW) ou un capteur d'écriture directe.

5. Système (212) selon la revendication 3, dans lequel le capteur de température (200) filaire inclut un thermocouple ou un détecteur de température résistif.

6. Système (212) selon l'une quelconque des revendications 1 à 5, comprenant en outre un système d'interrogation (204) pour interroger (206) le capteur de température (200) et pour recevoir (208) les données liées à la température du capteur de température (200).

7. Système selon la revendication 6, dans lequel le système d'interrogation (204) est adapté pour être situé à l'extérieur de la turbine (16).

8. Système selon l'une quelconque des revendications précédentes, comprenant en outre un système de commande de turbine (214) pour ajuster au moins une caractéristique opérationnelle de la turbine (16) sur la base des données liées à la température.

9. Système selon l'une quelconque des revendications précédentes, dans lequel l'élément sensible à la température (54, 78) inclut un matériau thermiquement expansible (58, 84).

10. Système selon l'une quelconque des revendications précédentes, dans lequel le dispositif de modulation d'écoulement passif est adapté pour moduler un flux d'air de refroidissement (32) à travers une ouverture dans une cavité d'espace de roue (30) de la turbine (16).

11. Système selon l'une quelconque des revendications précédente, dans lequel le logement (56, 80) contenant l'élément sensible à la température (54, 78) est adapté pour être positionné entre un stator (24) et un rotor (22) de la turbine (16), ou dans lequel le logement (56, 80) contenant l'élément sensible à la température (54, 78) est adapté pour être positionné à l'extérieur d'un stator (24) de la turbine (16).

12. Turbomachine, comprenant :
un système de turbine à gaz (2) incluant un composant de compresseur (4), un composant de chambre de combustion (10), et un composant de turbine (16) ; et
le système selon l'une quelconque des revendications précédentes.

13. Système de refroidissement, comprenant le système selon l'une quelconque des revendications 1 à 11 dans lequel :
le dispositif de modulation d'écoulement passif (36, 38) est adapté pour être positionné à l'intérieur de la turbine (16) pour moduler un flux d'air de refroidissement (32) à travers un orifice (34) dans une cavité d'espace de roue (30).
